# EUROPÄISCHE PATENTANMELDUNG

(11) **EP 3 611 463 A1**
(43) Veröffentlichungstag der Anmeldung: **19.02.2020**
(21) Anmeldenummer: 19189640.6
(22) Anmeldetag: 01.08.2019
(51) Int. Cl.: G01B 11/02, G01B 11/24, G01B 11/06

(54) **MESSVORRICHTUNG MIT OPTISCHER MESSANORDNUNG UND VERFAHREN ZUM DURCHFÜHREN EINER OPTISCHEN ABSTANDMESSUNG MIT EINER SOLCHEN MESSANORDNUNG**

(30) Priorität: 14.08.2018 DE 102018119697
(71) Anmelder: Klingelnberg GmbH, 42499 Hückeswagen (DE)
(72) Erfinder: Mies, Georg, 51688 Wipperfürth (DE); Fabian, Reuter, 50825 Köln (DE)
(74) Vertreter: Heusch, Christian

(57) **Zusammenfassung**

Messvorrichtung (10) mit
- einer Rotationsachse,
- mindestens einer gesteuerten Achse,
- einer Aufnahme für ein zu messendes Bauteil, insbesondere ein Zahnrad-Bauteil (11), die um die Rotationsachse drehantreibbar ist, und mit
- einer optischen, berührungslos arbeitende Messanordnung (17) mit einer Lichtquelle (LD), einer Optikanordnung (50) und einem optischen Detektor (26),
wobei die Messanordnung (17) so ausgelegt ist, dass sie in der Lage ist
- einen Lichtstrahl (LS), ausgehend von der Lichtquelle (LD) entlang einer optischen Achse (OA) in Richtung einer Objektebene (OE) des Bauteils (11) auszusenden,
- Lichtanteile mit unterschiedlichen Wellenlängen (λr, λg, λgr, λb), die an der Objektebene (OE) reflektiert wurden, durch die Optikanordnung (50) hindurch in Richtung des optischen Detektors (26) zu führen,
und wobei die Optikanordnung (50) eine erste Teilvorrichtung (51) und eine zweite Teilvorrichtung (52) umfasst, wobei die erste Teilvorrichtung (51) fest über einen Lichtwellenleiter (53) mit dem Detektor (26) verbunden ist, und wobei die zweite Teilvorrichtung (52) abnehmbar an der ersten Teilvorrichtung (51) angeordnet ist.

## Beschreibung

Die Erfindung betrifft eine Messvorrichtung mit optischer Messanordnung und ein Verfahren zum Durchführen einer optischen Abstandsmessung mit einer solchen Messanordnung.

### HINTERGRUND DER ERFINDUNG

In vielen technischen Bereichen ist das exakte Vermessen eines Bauteils von großer Bedeutung.

Es gibt z.B. Messvorrichtungen zum taktilen Erfassen der Beschaffenheit und des Profils von Oberflächen oder der Geometrie von Bauteilen. Typischerweise wird zu diesem Zweck eine Tastspitze über die zu vermessende Oberfläche geführt. Das mechanische Messen ist typischerweise zeitaufwendig.

Auf den ersten Blick könnte das optische Messen eine Alternative zu dem mechanischen Messen darstellen. Ideal wäre hier der Einsatz optisch messender Sensoren. Vor allem für das Messen von rotationssymmetrischen Bauteilen, wie z.B. das Verzahnungsmessen von Zahnrad-Bauteilen, könnte ein optischer Meßansatz eine gangbare Alternative darstellen.

Es hat sich jedoch gezeigt, dass sich die optisch messenden Sensoren aus verschiedenen Gründen für die Anforderungen an die Verzahnungsmessung nur bedingt eignen. Die besonderen Anforderungen oder Kriterien, die bei einer Verzahnungsmessung gelten, sind:
- ungünstige Antastwinkel,
- glatte Oberflächen z.B. der Zahnflanken,
- Abschattung durch benachbarte Zähne,
- hohe Anforderungen an die Messgenauigkeit (im Bereich von 0,1 - 0,5 Mikrometern),
- Verschmutzungsprobleme (z.B. durch Öl),
- Zerstörungsgefahr des Sensors bei einer Kollision mit einem Zahn des zu messenden Bauteils, und
- störende Brechungs- oder Reflektionseffekte z.B. durch Mehrfachreflexionen in engen Zahnlücken.

Es besteht der Bedarf Verzahnungsmessungen, z.B. im Rahmen der Produktion oder Qualitätskontrolle von Zahnrad-Bauteilen, vornehmen zu können, um verschiedene Zahnrad-Bauteil prüfen zu können.

Es ist eine Aufgabe der Erfindung eine Vorrichtung bereit zu stellen, die es ermöglicht schnelle und präzise Messungen an rotationssymmetrischen Bauteilen, insbesondere an Zahnrad-Bauteilen, vorzunehmen. Außerdem soll ein entsprechendes Verfahren bereitgestellt werden.

Eine solche Messaufgabe betrifft bei Zahnrad-Bauteilen z.B. die Teilungsmessung, bei der der Winkelabstand von Zahnflanke zu Zahnflanke bestimmt wird.

Die Aufgabe wird durch eine Messvorrichtung gemäß Anspruch 1 und durch ein Verfahren gemäß Anspruch 10 gelöst.

Eine erfindungsgemäße (Koordinaten-)Messvorrichtung umfasst
- eine Rotationsachse,
- mindestens eine gesteuerte Achse,
- eine Aufnahme (z.B. ein Drehtisch mit Spannvorrichtung) für ein zu messendes rotationssymmetrisches Bauteil, insbesondere ein Zahnrad-Bauteil, die um die Rotationsachse drehantreibbar ist, und
- eine optische, berührungslos arbeitende Messanordnung mit einer Lichtquelle, einer Optikanordnung und einem optischen Detektor,
   Diese Messanordnung ist so ausgelegt, dass sie in der Lage ist
- einen Lichtstrahl, ausgehend von der Lichtquelle entlang einer optischen Achse in Richtung einer Objektebene des (Zahnrad-)Bauteils auszusenden, wenn dieses (Zahnrad-)Bauteil in der Aufnahme angeordnet ist, und
- Lichtanteile mit unterschiedlichen Wellenlängen, die an der Objektebene reflektiert wurden, durch die Optikanordnung hindurch in Richtung des optischen Detektors zu führen,
wobei die Optikanordnung eine erste Teilvorrichtung und eine zweite Teilvorrichtung umfasst, wobei die erste Teilvorrichtung fest über einen Lichtwellenleiter mit dem Detektor verbunden ist, und wobei die zweite Teilvorrichtung abnehmbar an der ersten Teilvorrichtung angeordnet ist.

Die Erfindung setzt bei mindestens einem Teil der Ausführungsformen auf den Einsatz einer konfokal-chromatischen optischen Messanordnung, die eine hohe Auflösung hat. Eine solche Messanordnung benötigt aber eine relativ große numerische Apertur, wenn man die oben genannten Bedingungen erfüllen möchte. Dadurch entsteht ein relativ breiter Lichtkegel. Will man Abschattungen des Lichtkegels an benachbarten Zähnen vermeiden, entstehen bei der Verzahnungsmessung ungünstige steile Antastwinkel. Bei einem steilen Antastwinkel empfängt der Detektor der Messanordnung jedoch kein brauchbares reflektiertes Lichtsignal. Alternativ kann die Optik der konfokal-chromatischen optischen Messanordnung relativ nahe an die zu messende Oberfläche heran geführt werden, um brauchbare reflektierte Lichtsignale zu erhalten. Außerdem muss hier jedoch möglichst präzise ein geeigneter Abstand zwischen der Optikanordnung und der Objektebene des (Zahnrad-)Bauteils eingestellt werden.

Da die bei einer konfokal-chromatischen Messung geeignete Konstellation bei einem ersten (Zahnrad-)Bauteil anders ist als bei einem zweiten andersartigen (Zahnrad-)Bauteil, werden gemäß Erfindung beim Messen verschiedener (Zahnrad-)Bauteile auch jeweils verschiedene Konstellationen der Optikanordnung vorgegeben. Um das Umrüsten der Messvorrichtung der Erfindung effizient zu gestalten, kommt eine Wechseloptik zum Einsatz.

Die Optikanordnung ist speziell so ausgelegt, dass lediglich durch das Austauschen der Wechseloptik (auch zweite Teilvorrichtung genannt) eine Anpassung vorgenommen werden kann. Dieses Austauschen der Wechseloptik kann besonders effizient erfolgen, da eine Positionierungsanordnung zum Einsatz kommt, die es ermöglicht die zweite Teilvorrichtung der Optikanordnung positionsgenau mit der ersten Teilvorrichtung zu verbinden.

Bei mindestens einem Teil der Ausführungsformen kommt zusätzlich zu der Positionierungsanordnung eine Magnetanordnung zum Einsatz, die für die notwendigen Haltekräfte sorgt, um die zweite Teilvorrichtung während des Messens zuverlässig mit der ersten Teilvorrichtung zu verbinden.

Durch die Wahl und Anordnung der Magnete der Magnetanordnung können die Haltekräfte exakt so dimensioniert werden, dass die zweite Teilvorrichtung fest mit der ersten Teilvorrichtung verbunden ist und dass die zweite Teilvorrichtung durch das Aufbringen einer definierten Trennkraft problemlos von der ersten Teilvorrichtung getrennt werden kann.

Bei mindestens einem Teil der Ausführungsformen kann zum Aufbringen der notwendigen Haltekräfte statt der Magnetanordnung eine Federanordnung, ein System, das einen Unterdruck erzeugt, eine Anordnung mit einem Bajonettverschluss, oder ein Riegel, z.B. ein elektro-mechanisch zu betätigender Riegel, eingesetzt werden.

Bei mindestens einem Teil der Ausführungsformen umfasst die zweite Teilvorrichtung nur wenige optische Bauteile (z.B. nur eine optische Linse), um die Kosten der zweiten Teilvorrichtung in einem vertretbaren Rahmen zu halten.

Vorzugsweise ist eine Messvorrichtung der Erfindung bei mindestens einem Teil der Ausführungsformen mit mindestens einer (NC-)gesteuerten Achse ausgestattet, wobei es sich z.B. um eine Linearachse zum Bewegen der optischen, berührungslos arbeitenden Messanordnung relativ zum (Zahnrad-) Bauteil und/oder um eine Rotationsachse zum Drehantreiben des (Zahnrad-) Bauteils relativ zur Messanordnung handeln kann. Eine solche Messvorrichtung mit mindestens einer (NC-)gesteuerten Achse ermöglicht das hochgenaue Positionieren der Optikanordnung relativ zum Objektebene.

Die Erfindung beruht auf dem Einsatz mindestens einer optischen Messanordnung, der eine hochgenaue und schnelle Abstandsermittlung dadurch ermöglicht, dass temporär für den jeweiligen Einsatzfall eine geeignete Wechseloptik an der Messanordnung fixiert wird.

Der Nennabstand der Messanordnung kann mindestens bei einem Teil der Ausführungsformen beispielsweise im Bereich von 5 bis 50 mm liegen. Um diesen Abstandsbereich des Nennabstandes abdecken zu können, kann die Messanordnung bei mindestens einem Teil der Ausführungsformen zwei oder mehr als zwei unterschiedliche Wechseloptiken umfassen.

Der Messbereich der Messanordnung kann mindestens bei einem Teil der Ausführungsformen beispielsweise im Bereich von ±0,3 mm liegen, wenn temporär jeweils die geeignet Wechseloptik montiert ist.

Bei mindestens einem Teil der Ausführungsformen ermöglicht/ermöglichen eine Linearachse/mehrere Linearachsen eine hochgenaue Positionierung der Optikanordnung relativ zum Objektebene (wobei eine oder mehrere der Achsen der Messvorrichtung NC-gesteuert sein können).

Mindestens ein Teil der Ausführungsformen setzt auf eine Gesamtkonstellation der Messvorrichtung, bei der das (Zahnrad-)Bauteil mit seiner Rotationsachse konzentrisch zu einer Rotationsachse einer drehantreibbaren Aufnahme der Vorrichtung aufgenommen wird. Die Rotationsachse der drehantreibbaren Aufnahme steht dabei senkrecht im Raum. Die Messanordnung ist bei dieser bevorzugten Gesamtkonstellation so ausgelegt, dass sie einen Lichtstrahl aussendet, der radial zur Rotationsachse der drehantreibbaren Aufnahme verläuft oder der tangential zu einem Kreis, der konzentrisch zu der Rotationsachse liegt, verläuft. Dabei breitet sich dieser Lichtstrahl in einer Ebene aus, die im Wesentlichen senkrecht steht zu der Rotationsachse der drehantreibbaren Aufnahme.

Bei mindestens einem Teil der Ausführungsformen kann die Ebene des Lichtstrahls leicht schräg angestellt werden, was z.B. für das Messen von Kegelrädern genutzt werden kann.

Vorteilhafte Ausgestaltungen der erfindungsgemäßen (Koordinaten-) Messvorrichtung sind den abhängigen Ansprüchen zu entnehmen.

Die Erfindung lässt sich im Zusammenhang mit 1D-, 2D- und 3D-Oberflächen-Messungen an (Zahnrad-)Bauteilen, wie z.B. Zahnrädern, Plankupplungselementen und dergleichen verwenden.

Es handelt sich hier nicht um eine Vorrichtung zum bildgebenden Verfahren, sondern um eine Vorrichtung, die zur hochgenauen Abstandsmessung geeignet ist. Bei dem konfokal messenden Ansatz der Erfindung handelt es sich um eine punktweise messende Methode. Das Objekt wird nicht abgebildet, sondern der projizierte Lichtpunkt wird von der Oberfläche reflektiert. Aus dieser Reflektion wird nur die Wellenlänge des im Fokus befindlichen Lichts detektiert. Aus der Wellenlänge kann der Abstand bestimmt werden, es handelt sich also um eine reine Punkt-Abstandsmessung. Erst die Kombination aus einer Vielzahl so gemessener Abstände und den dazu gehörenden Koordinaten, die aus den Achspositionen gebildet werden, kann eine rechnerische Rekonstruktion der Oberfläche erzeugt werden.

### ZEICHNUNGEN

Ausführungsbeispiele der Erfindung werden im Folgenden unter Bezugnahme auf die Zeichnungen näher beschrieben.
- **FIG. 1A**: zeigt eine schematische Darstellung, die zum Erläutern des Grundprinzips der Erfindung dient, wobei lediglich ein einzelner Zahn eines Zahnrad-Bauteils und der Strahlengang eines konfokal-chromatischen optischen Systems dargestellt sind;
- **FIG. 1B**: zeigt eine schematische Grafik, um die Funktion des Detektors einer Vorrichtung der Erfindung erläutern zu können;
- **FIG. 2**: zeigt eine schematische Darstellung, die Details einer Ausführungsform der Erfindung zeigt;
- **FIG. 3**: zeigt eine schematische Darstellung, die Details einer weiteren Ausführungsform der Erfindung zeigt;
- **FIG. 4**: zeigt eine schematische Darstellung, die Details einer weiteren Ausführungsform der Optikanordnung der Erfindung zeigt;
- **FIG. 5A**: zeigt eine schematische Ansicht der Stirnseite eines ersten Teils der Optikanordnung einer weiteren Ausführungsform;
- **FIG. 5B**: zeigt eine schematische Ansicht der Stirnseite eines weiteren ersten Teils der Optikanordnung einer weiteren Ausführungsform;
- **FIG. 6**: zeigt eine schematische Ansicht einer weiteren Ausführungsform der Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

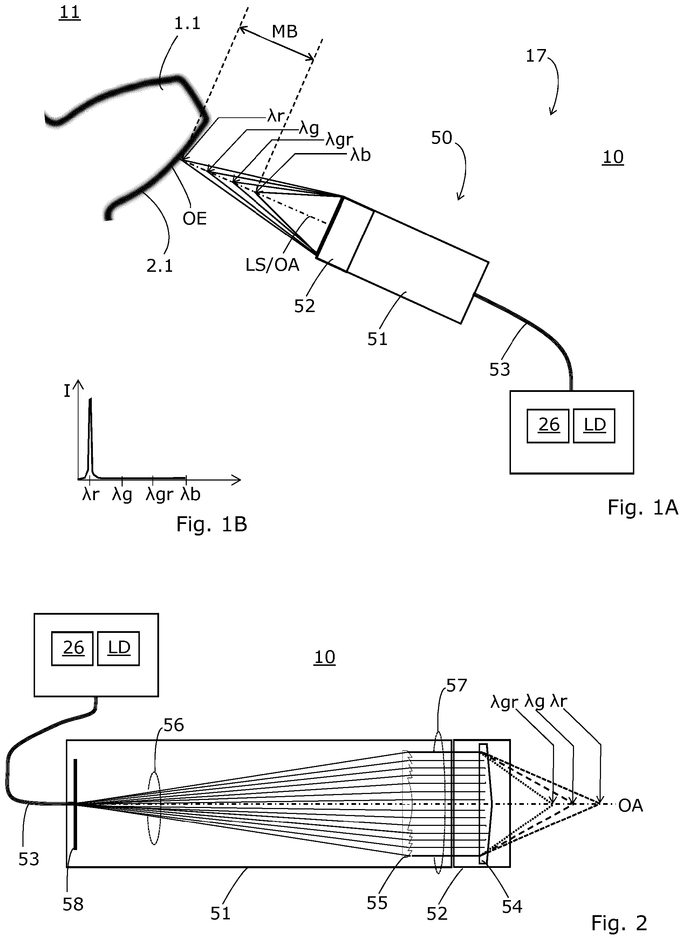

Das Grundprinzips der Erfindung wird im Folgenden anhand der stark schematisierten Darstellung der Fig. 1A beschrieben. In Fig. 1A ist lediglich ein einzelner Zahn 1.1 eines Zahnrad-Bauteils 11 gezeigt. Außerdem ist in Fig. 1A der Strahlengang eines konfokal-chromatischen optischen Systems schematisch dargestellt.

Es kommt eine Optikanordnung 50 zu Einsatz, die eine erste Teilvorrichtung 51 und eine zweite Teilvorrichtung 52 umfasst. Die erste Teilvorrichtung 51 ist bei dem gezeigten Ausführungsbeispiel fest über einen Lichtwellenleiter 53 mit der Lichtquelle LD und dem Detektor 26 verbunden. Die zweite Teilvorrichtung 52 ist abnehmbar an der ersten Teilvorrichtung 51 angeordnet.

In Fig. 1A ist zu erkennen, dass die Messanordnung 17 (die hier die Lichtquelle LD, den Detektor 26, den Lichtwellenleiter 53, die erste Teilvorrichtung 51 und die zweite Teilvorrichtung 52 umfasst) so ausgelegt ist, dass sie in der Lage ist einen Lichtstrahl LS entlang einer optischen Achse in Richtung einer Objektebene OE des Zahnrad-Bauteils 11 auszusenden. Das Licht des Lichtstrahls LS wird von der Lichtquelle LD erzeugt und durch den Lichtwellenleiter 53 in die erste Teilvorrichtung 51 eingekoppelt. Von dort verläuft der Lichtstrahl LS durch die zweite Teilvorrichtung 52 hindurch, um auf der Objektebene OE einen stark fokussierten Lichtpunkt zu erzeugen.

Entweder kommt eine Weisslichtquelle LD zum Einsatz, die sämtliche Spektralanteile von weißem Licht erzeugt, oder es kommt eine Lichtquelle LD zum Einsatz, die Licht mit mehreren Wellenlängenanteilen als Lichtstrahl LS erzeugt. Eine Lichtquelle LD, die Licht mit mehreren Wellenlängenanteilen erzeugt, wird hier auch als Breitspektrum-Lichtquelle bezeichnet.

Aufgrund der Tatsache, dass der Lichtstrahl LS mehrere unterschiedliche Wellenlängenanteile (Farblichtanteile) umfasst und aufgrund der Tatsache, dass die Optikanordnung 50 so ausgelegt ist, dass die unterschiedlichen Wellenlängenanteile jeweils eine andere Fokuslänge haben, kann der Abstand zwischen der Optikanordnung 50 und der Objektebene OE wie folgt gemessen werden.

In Fig. 1A ist beispielhaft dargestellt, dass die Wellenlänge λr des roten Lichtanteils eine andere Fokuslänge hat als die Wellenlängen λg des gelben Lichtanteils, λgr des grünen Lichtanteils und λb des blauen Lichtanteils. Im gezeigten Beispiel liegt die Objektebene OE exakt im Fokus des roten Lichtanteils. Es wird daher hauptsächlich der rote Lichtanteil zurück reflektiert und durch die Optikanordnung 50 zu dem Detektor 26 geleitet. Der Detektor 26 empfängt und detektiert in diesem Beispiel primär den roten Wellenlängenanteil.

In Fig. 1B ist anhand einer schematischen Grafik die Lichtintensität I über die Wellenlänge aufgetragen. Die Intensität hat bei der roten Wellenlänge λr ein Maximum.

Da die Fokuslänge der Optikanordnung 50, die hier beispielsweise eine erste Teilvorrichtung 51 umfasst, bekannt ist, kann aus der Lage des Intensitätsmaximums und der Fokuslänge der relative Abstand zur Objektebene OE berechnet werden.

Generell kann gesagt werden, dass die Optikanordnung 50 so ausgelegt ist, dass die unterschiedlichen Spektralanteile des Lichtstrahls LS in unterschiedlichen Entfernungen von der Optikanordnung 50 fokussiert werden. Dadurch ergibt sich ein Messbereich MB, der in Fig. 1A angedeutet ist.

Es kommen zwei oder mehr als zwei unterschiedliche zweite Teilvorrichtungen 52 zum Einsatz, wobei jede dieser Teilvorrichtungen 52 einen anderen Messbereich MB aufweist. Die unterschiedlichen Messbereiche MB der unterschiedlichen zweiten Teilvorrichtungen 52 ergeben sich z.B. dadurch, dass diese Teilvorrichtungen 52 Linsen 54 umfassen, die unterschiedliche Fokuseigenschaften haben.

Falls in der Vorrichtung 11 die Position der Optikanordnung 50 im dreidimensionalen Raum bekannt ist, so kann aus dem relativen Abstand zur Objektebene OE die absolute Position der Objektebene OE im dreidimensionalen Raum ermittelt werden.

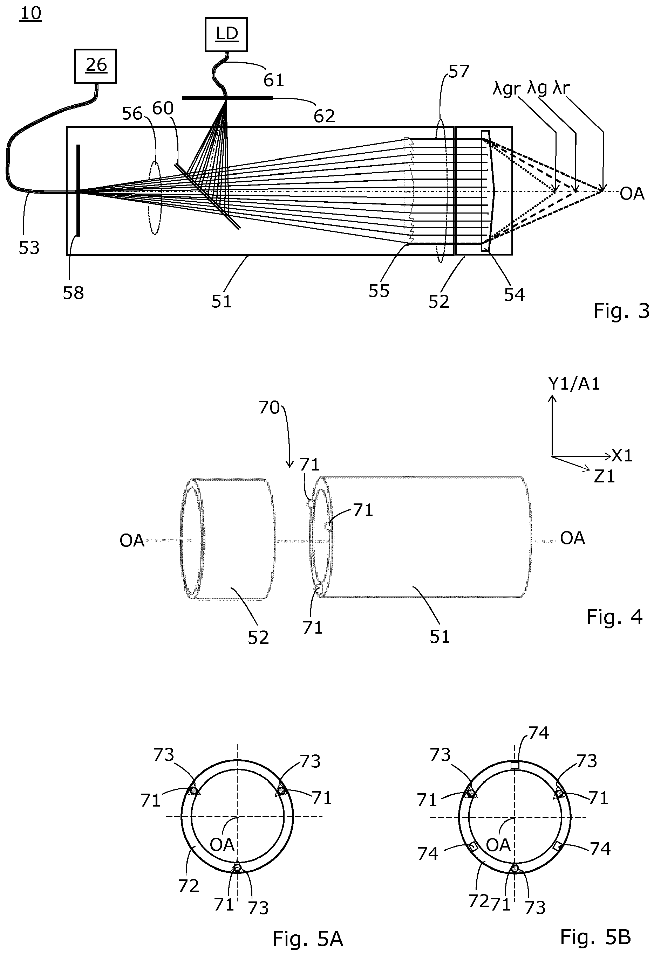

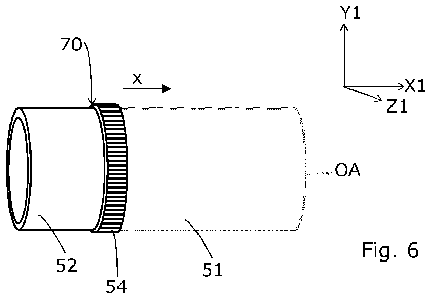

Bei denjenigen Ausführungsformen, die eine Messvorrichtung 10 mit NC-gesteuerten Achsen umfassen (diese Messvorrichtung 10 werden hier als Koordinaten-Messvorrichtung 10 bezeichnet), ist die Position der einzelnen Achsen bekannt. Aus der momentanen Position der einzelnen Achsen kann die Position der Optikanordnung 50 im dreidimensionalen Raum errechnet werden. In den Figuren 4 und 6 ist eine mögliche Zuordnung der NC-gesteuerten Linearachsen X1, Y1, Z1 gezeigt.

Details einer weiteren Ausführungsform der Erfindung sind in Fig. 2 gezeigt. In dieser Figur ist vor allem der innere Aufbau der Optikanordnung 50 zu erkennen. Die Optikanordnung 50 umfasst einen ersten Teil 51 und einen zweiten Teil 52. Der zweite Teil 52 umfasst hier eine optische Linse 54, die dazu ausgelegt ist das weiße Licht aufzuspalten in Spektralanteile mit unterschiedlicher Fokuslänge.

Bei mindestens einem Teil der Ausführungsformen kommt eine Sammellinse mit chromatischer Aberration als Linse 54 zum Einsatz. Die äussere Form dieser Linse 54 ist in den Figuren rein schematisch gezeigt. Es handelt sich bei der Linse 54 um eine plan-konvexe Linse mit positiver Brennweite, die nicht dispersionskorrigiert ist. D.h. die Linse 54 zeigt ein Brechungsverhalten, das von der Wellenlänge abhängt. Die Linse 54 bricht kurzwelliges Licht (blau) stärker als langwelliges (rot) und somit wird das Weisslicht in seine Spektralfarben zerlegt. D.h. die Linse 54 hat unterschiedlichen Brennweiten für die verschiedene Wellenlängen.

In Fig. 2 sind die Strahlengänge von drei verschiedenen Wellenlängen durch unterschiedliche Strichlierungen dargestellt. Rotes Licht (siehe λr) hat einen Fokus, der am weitesten von der Linse 54 beabstandet ist. Es folgen der Fokus von gelbem Licht (siehe λg) und der Fokus von grünem Licht (siehe λgr). Der Lichtstrahl LS hat hier keinen oder nur einen geringen Blauanteil.

Die Optikanordnung 50 umfasst weiterhin eine Linse 55, die hier in dem ersten Teil 51 angeordnet ist, die aus dem Strahlenbündel 56 einen parallelen Strahlengang 57 erzeugt. Bei mindestens einem Teil der Ausführungsformen kommt eine Fresnel-Linse als Linse 55 zum Einsatz. Statt einer Fresnel-Linse kann auch eine Sammellinse so dimensioniert/ausgelegt werden, dass sie als Linse 55 die divergierenden Strahlen des Strahlenbündels 56 zu einem Strahlenbündel 57 mit parallelen Strahlen bündelt.

Bei mindestens einem Teil der Ausführungsformen kann die Optikanordnung 50 eine Lochblende 58 umfassen, um das Licht, das aus dem Lichtwellenleiter 53 in das Innere des ersten Teils 51 geführt wird in ein Strahlenbündel 56 aufzubrechen.

Licht, das an der Objektebene OE reflektiert wird, wird durch die Linse 54 und die Linse 55 zurück in Richtung der Lochblende 58 geführt. An der Lochblende 58 wird dieses Licht in den Lichtwellenleiter 53 eingekoppelt und dort zu dem Detektor 26 geleitet. Der Beleuchtungsstrahlengang und der Abbildungsstrahlengang verlaufen entlang desselben optischen Pfades falls es sich um eine konfokal chromatische Optikanordnung 50 handelt.

Bei mindestens einem Teil der Ausführungsformen ist der Detektor 26 als Spektrometer ausgelegt, um den dominierenden Lichtanteil (Spektralanteil) des Abbildungsstrahlengangs ermitteln zu können.

Bei mindestens einem Teil der Ausführungsformen ist die Optikanordnung 50 so ausgelegt, dass der Beleuchtungsstrahlengang und der Abbildungsstrahlengang mindestens teilweise entlang eines anderen optischen Pfades verlaufen. Ein entsprechendes Beispiel ist der Fig. 3 zu entnehmen. Es wird im Zusammenhang mit der Fig. 3 auf die Beschreibung der Fig. 2 verwiesen. Im Folgenden werden lediglich die wesentlichen Unterschiede beschrieben.

Die Ausführungsform der Fig. 3 umfasst einen semitransparenten Spiegel 60, der so im Strahlengang angeordnet ist, dass der Abbildungsstrahlengang durch den Spiegel 60 hindurch in Richtung der Lochblende 58 und des Detektors 26 geführt wird. Das Licht der Lichtquelle LD wird über einen Lichtwellenleiter 61 zu einer weiteren Lochblende 62 geführt. An dieser Lochblende 62 wird das Licht durch Brechung aufgefächert und über den Spiegel 60 konfokal in das Strahlenbündel 56 eingekoppelt.

Bei mindestens einem Teil der Ausführungsformen kann der Beleuchtungsstrahlengang auch komplett an der Optikanordnung 50 vorbei auf die Objektebene OE projiziert werden.

Bei mindestens einem Teil der Ausführungsformen kommen die folgenden Schritte zum Einsatz, wenn eine optische Abstandsmessung an einer Objektebene OE eines Zahnrad-Bauteils 11 vorgenommen werden soll. Die Reihenfolge der Schritt muss nicht zwingend der in Folgenden gegebenen Reihenfolge entsprechen.

Vorzugsweise umfasst das Verfahren die folgenden Schritte:
- Auswählen einer Teilvorrichtung 52 (hier als zweite Teilvorrichtung 52 bezeichnet) aus einer Menge von Teilvorrichtungen, die sich durch unterschiedliche optische Messbereiche MB unterscheiden. Die Teilvorrichtungen können beispielsweise in einem Magazin in der Nähe der Messvorrichtung 10 bereit gestellt werden. Das Auswählen der Teilvorrichtung 52 kann manuell oder automatisiert erfolgen.
- Bereitstellen einer Optikanordnung 50 durch das Anbringen der ausgewählten zweiten Teilvorrichtung 52 an einer ersten Teilvorrichtung 51 so, dass sich eine optische Achse OA der Optikanordnung 50 ergibt, die konzentrisch durch beide Teilvorrichtungen 51, 52 hindurch in Richtung der Objektebene OE verläuft. Das Anbringen der zweiten Teilvorrichtung 52 an der ersten Teilvorrichtung 51 kann manuell oder automatisiert (z.B. mit einem Roboterarm) erfolgen.
- Positionieren der Optikanordnung 50 relativ zu der Objektebene OE, wobei ein relativer Abstand zwischen der Optikanordnung 50 und der Objektebene OE vorgegeben wird, der im Bereich des optischen Messbereichs MB der ausgewählten Teilvorrichtung 52 liegt. Vorzugsweise erfolgt das Positionieren durch eine Bewegen einer oder mehrerer Achsen der Messvorrichtung 10. Besonders bevorzugt sind Verfahrensansätze, bei denen ein mittlerer Abstand relativ zu der Objektebene OE vorgegeben wird, der in etwa mittig innerhalb des optischen Messbereichs MB liegt. Damit ergeben sich in beide Bewegungsrichtungen (z.B. senkrecht zur Objektebene betrachtet) in positive sowie negative Richtung in etwa dieselben Wege zum Einstellen des Fokuspunktes durch das Relativbewegen der Optikanordnung 50.
- Einkoppeln von Weisslicht oder Breitspektrumlicht mit mehreren Spektralanteilen so, dass das Weisslicht oder das Breitspektrumlicht in dem optischen Messbereich MB unterschiedliche Fokuspunkte für die Spektralanteile bildet (wie beispielhaft in den Figuren 1A, 2 und 3 gezeigt).
- Einkoppeln von einem Spektralanteil (hier auch als Beobachtungsstrahlengang bezeichnet), dessen Fokuspunkt die Objektebene OE getroffen hat, in die Optikanordnung 50.
- Führen dieses Spektralanteils zu einem Detektor 26, der zur Spektralanalyse dieses Spektralanteils ausgelegt ist.
- Ermitteln der Wellenlänge dieses Spektralanteils oder Detektieren dieses Spektralanteils.
- Ermitteln von Abstandsinformation aus der ermittelten Wellenlänge und aus Information, die den optischen Messbereich MB der ausgewählten Teilvorrichtung 52 definiert.

Bei mindestens einem Teil der Ausführungsformen umfasst die Optikanordnung 50 eine Positionierungsanordnung 70, die es ermöglicht die zweite Teilvorrichtung 52 positionsgenau mit der ersten Teilvorrichtung 51 zu verbinden. Die Positionierungsanordnung 70 umfasst vorzugsweise bei allen Ausführungsformen drei rotationssymmetrische Körper 71 (z.B. drei Kugeln oder Zylinderelemente) und drei korrespondierende Aufnahmebereiche. Die korrespondierenden Aufnahmebereiche sind in Fig. 4 nicht zu erkennen, da sie an der nicht sichtbaren Stirnseite der zweiten Teilvorrichtung 52 vorgesehen sind. Dadurch ergibt sich eine genau definierte Dreipunktlagerung (genau genommen handelt es sich um eine Sechspunktlagerung) der zweiten Teilvorrichtung 52 an der ersten Teilvorrichtung 51.

Die erste Teilvorrichtung 51 und die zweite Teilvorrichtung 52 haben beispielsweise jeweils die Grundform eines Hohlzylinders. Im Inneren der Hohlzylinder können, wie in den Figuren 2 und 3 beispielhaft angedeutet, die optischen Elemente (z.B. Linsen 54, 55, Lochblende(n) 58, semitransparente Spiegel 60, Prismen, Gratings, usw.) angeordnet sein.

In Fig. 5A ist in stark schematisierter Form die Ansicht der Stirnseite einer beispielhaften ersten Teilvorrichtung 51 gezeigt. Auch bei dieser Ausführungsform hat erste Teilvorrichtung 51 eine Hohlzylinderform. Im Bereich der Stirnseite ergibt sich aufgrund der Wandstärke des Hohlzylinders eine ringförmige Fläche 72, die Senkrecht zur optischen Achse OA steht. Die ringförmige Fläche 72 kann auch dadurch entstehen, dass an dem Hohlzylinder ein Kragen oder eine Schulter vorgesehen ist.

Wie in Fig. 5A gezeigt, dienen hier drei Kugeln 71 (grau dargestellt) als rotationssymmetrische Körper. Diese rotationssymmetrischen Körper 71 habe hier einen gegenseitigen Winkelabstand von 120 Grad. Die zweite Teilvorrichtung 52 hat eine entsprechende ringförmige Fläche auf der Stirnseite, die der ersten Teilvorrichtung 51 zugewandt ist. im Bereich dieser entsprechenden ringförmigen Fläche sind drei prismatische Ausnehmungen vorgesehen, die auch einen gegenseitigen Winkelabstand von 120 Grad haben. Die prismatische Ausnehmungen sind von der Dimensionierung und Anordnung so ausgelegt, dass sie mit den rotationssymmetrischen Körpern 71 korrespondieren. In Fig. 5A sind die Umrisse der drei prismatische Ausnehmungen 73 durch strichlierte Dreiecke angedeutet.

Beim Zusammenfügen der zweiten Teilvorrichtung 52 mit der ersten Teilvorrichtung 51, kommt es durch den Einsatz der Positionierungsanordnung 70 zur Selbstzentrierung der Zylinderachsen der beiden Hohlzylinder. Durch die Selbstzentrierung ist gewährleistet, dass die optische Achse konzentrisch zu den beiden Zylinderachsen liegt.

In Fig. 5B ist in stark schematisierter Form die Ansicht der Stirnseite einer weiteren beispielhaften ersten Teilvorrichtung 51 gezeigt. Es wird hier auf die Beschreibung der Fig. 5A verwiesen. Im Gegensatz zur Ausführungsform der Fig. 5A, umfasst die Ausführungsform der Fig. 5B eine Magnetanordnung mit drei (Permanent-)Magneten 74. Es ergeben sich Haltekräfte, die durch die Magnetstärke und Positionierung der Magnete 74 exakt so dimensioniert werden können, dass die zweite Teilvorrichtung 52 fest mit der ersten Teilvorrichtung 51 verbunden ist und dass die zweite Teilvorrichtung 52 durch das Aufbringen einer definierten Trennkraft problemlos von der ersten Teilvorrichtung 51 getrennt werden kann. Bei dem in Fig. 5B gezeigten Ausführungsbeispiel kommen drei (Permanent-)Magnete 74 zum Einsatz, die einen Winkelabstand von 60 Grad gegenüber den rotationssymmetrischen Körpern 71 aufweisen. Untereinander haben die drei (Permanent-)Magnete 74 jeweils einen Winkelabstand von 120 Grad.

Da es sich bei eine (Koordinaten-)Messvorrichtung 10 um ein empfindliches Gerät handelt, können die Ausführungsformen, die mit (Permanent-)Magneten 74 arbeiten, Mittel umfassen, die ein schonendes Trennen der zweiten Teilvorrichtung 52 von der ersten Teilvorrichtung 51 ermöglichen. Als schonendes Trennen wird hier ein Vorgang betrachtet, bei dem nur geringe Zug- und/oder Scherkräfte über die erste Teilvorrichtung 51 auf die (Koordinaten-)Messvorrichtung 10 ausgeübt werden.

Zu diesem Zweck kann die erste Teilvorrichtung 51 und/oder die zweite Teilvorrichtung 52 z.B. mit einem Hebel oder Griffelement versehen sein, der so auf die jeweils andere Teilvorrichtung einwirkt, dass ein kleiner Luftspalt zwischen den (Permanent-)Magneten 74 und einem metallischen Gegenstück erzeugt wird. Durch das Erzeugen eines kleinen Luftspaltes werden die Haltekräfte deutlich reduziert und die zweite Teilvorrichtung 52 kann nahezu kräftefrei von der ersten Teilvorrichtung 51 getrennt werden.

Wie in Fig. 6 in schematischer Form gezeigt, kann zu dem genannten Zweck auch ein Ringelement 62 an der ersten Teilvorrichtung 51 vorgesehen sein. Dieses Ringelement 62 kann z.B. so federgelagert sein, dass durch ein Ziehen des Ringelementes 62 in x-Richtung der Abstand zwischen den (Permanent-)Magneten 74 und einem metallischen Gegenstück vergrößert wird. Durch das Ziehen werden die Haltekräfte deutlich reduziert und die zweite Teilvorrichtung 52 kann nahezu kräftefrei von der ersten Teilvorrichtung 51 getrennt werden. Entsprechend kann das Ringelement 62 auch so ausgelegt sein, dass durch ein Drehen des Ringelementes 62 um die Zylinderachse des Hohlzylinders, der ein Bestandteil der ersten Teilvorrichtung 51 ist, die Haltekräfte reduziert werden.

Bei mindestens einem Teil der Ausführungsformen kann als Teil der (Koordinaten-)Messvorrichtung 10 zum Aufbringen der notwendigen Haltekräfte statt der Magnetanordnung eine Federanordnung, ein System, das einen Unterdruck erzeugt, eine Anordnung mit einem Bajonettverschluss, oder ein Riegel, z.B. ein elektro-mechanisch zu betätigender Riegel, eingesetzt werden.

Mindestens ein Teil der Ausführungsformen setzt auf eine Gesamtkonstellation der Messvorrichtung 10, bei der das (Zahnrad-)Bauteil 11 mit seiner Rotationsachse konzentrisch zu einer Rotationsachse A1 einer drehantreibbaren Aufnahme der Vorrichtung aufgenommen wird. Die Rotationsachse A1 der drehantreibbaren Aufnahme steht dabei senkrecht im Raum (parallel zur Y1-Achse, die in Fig. 4 gezeigt ist). Die Messanordnung 50 ist bei dieser bevorzugten Gesamtkonstellation so ausgelegt, dass sie einen Lichtstrahl LS aussendet, der radial zur Rotationsachse A1 der drehantreibbaren Aufnahme, oder tangential zu einem Kreis verläuft, der konzentrisch zur Rotationsachse A1 liegt. Dabei breitet sich dieser Lichtstrahl LS in einer Ebene aus, die im Wesentlichen senkrecht steht zu der Rotationsachse A1 der drehantreibbaren Aufnahme. Bei dem Beispiel der Fig. 4 liegt diese Ebene parallel zur Ebene, die durch die X1-Achse und Z1-Achse aufgespannt wird.

Bei mindestens einem Teil der Ausführungsformen kann die Ebene des Lichtstrahls LS leicht schräg angestellt werden, was z.B. für das Messen von Kegelrädern genutzt werden kann.

**Bezugszeichen:**

| | |
|---|---|
| Zähne | 1.1 |
| Messgerät / Messvorrichtung / Koordinaten-Messvorrichtung | 10 |
| Bauteil / Zahnrad-Bauteil | 11 |
| Messaufbau / Messanordnung | 17 |
| Optischer Sensor / Mess-Sensor | 20 |
| Detektor | 26 |
| | |
| Optikanordnung | 50 |
| erster Teil | 51 |
| zweiter Teil | 52 |
| Lichtwellen leiter | 53 |
| Linse | 54 |
| Linse | 55 |
| Strahlenbündel | 56 |
| Strahlenbündel | 57 |
| Lochblende | 58 |
| Lochblende | 59 |
| semitransparenter Spiegel | 60 |
| Lichtwellen leiter | 61 |
| Ring(element) | 62 |
| | |
| Positionierungsanordnung | 70 |
| rotationssymmetrische Körper | 71 |
| ringförmige Fläche | 72 |
| prismatische Ausnehmungen | 73 |
| (Permanent-)Magnete | 74 |
| | |
| Rotationsachse | A1 |
| Lichtintensität | I |
| (Weiss-)Lichtquelle / Leuchtdiode / Laserdiode / Breitspektrum-Lichtquelle | LD |
| Lichtstrahl | LS |
| Wellenlängen | λr, λg, λgr, λb |
| optische Achse | OA |
| Objektebene | OE |
| Richtung | x |
| Linearachsen | X1, Y1, Z1 |

## Patentansprüche

1. Messvorrichtung (10) mit
- einer Rotationsachse (A1),
- mindestens einer gesteuerten Achse (X1, Y1, Z1),
- einer Aufnahme für ein zu messendes Bauteil, insbesondere ein Zahnrad-Bauteil (11), die um die Rotationsachse (A1) drehantreibbar ist, und mit
- einer optischen, berührungslos arbeitende Messanordnung (17) mit einer Lichtquelle (LD), einer Optikanordnung (50) und einem optischen Detektor (26),
wobei die Messanordnung (17) so ausgelegt ist, dass sie in der Lage ist
- einen Lichtstrahl (LS), ausgehend von der Lichtquelle (LD) entlang einer optischen Achse (OA) in Richtung einer Objektebene (OE) des Bauteils (11) auszusenden, wenn dieses in der Aufnahme angeordnet ist,
- Lichtanteile mit unterschiedlichen Wellenlängen (λr, λg, λgr, λb), die an der Objektebene (OE) reflektiert wurden, durch die Optikanordnung (50) hindurch in Richtung des optischen Detektors (26) zu führen,
und wobei die Optikanordnung (50) eine erste Teilvorrichtung (51) und eine zweite Teilvorrichtung (52) umfasst, wobei die erste Teilvorrichtung (51) fest über einen Lichtwellenleiter (53) mit dem Detektor (26) verbunden ist, und wobei die zweite Teilvorrichtung (52) abnehmbar an der ersten Teilvorrichtung (51) angeordnet ist.

2. Messvorrichtung (10) nach Anspruch 1, **dadurch gekennzeichnet, dass** es sich bei der Lichtquelle (LD) um eine Weisslichtquelle handelt, die weißes Licht als Lichtstrahl LS aussendet, oder dass es sich bei der Lichtquelle (LD) um eine Breitspektrumlichtquelle handelt, die Licht mit mehreren Wellenlängenanteilen als Lichtstrahl LS aussendet.

3. Messvorrichtung (10) nach Anspruch 2, **dadurch gekennzeichnet, dass** die Messanordnung (17) als konfokal-chromatisches optisches System ausgebildet ist.

4. Messvorrichtung (10) nach einem der Ansprüche 1 bis 3, **dadurch gekennzeichnet, dass** der Lichtstrahl (LS) entlang eines Beleuchtungsstrahlengangs in Richtung der Objektebene (OE) geführt wird, und dass die Lichtanteile, die an der Objektebene (OE) reflektiert wurden, entlang eines Beobachtungsstrahlengangs in Richtung des Detektors (26) geführt werden.

5. Messvorrichtung (10) nach Anspruch 4, **dadurch gekennzeichnet, dass**
- entweder der Beleuchtungsstrahlengang,
- oder der Beobachtungsstrahlengang,
- oder der Beleuchtungsstrahlengang und der Beobachtungsstrahlengang durch die Optikanordnung (50) geführt werden.

6. Messvorrichtung (10) nach einem der Ansprüche 1 bis 5, **dadurch gekennzeichnet, dass** der Detektor (26) zur Spektralanalyse der Lichtanteile mit unterschiedlichen Wellenlängen (λr, λg, λgr, λb) ausgelegt ist, die an der Objektebene (OE) reflektiert wurden.

7. Messvorrichtung (10) nach einem der Ansprüche 1 bis 6, **dadurch gekennzeichnet, dass** die zweite Teilvorrichtung (52) der Optikanordnung (50) über eine Positionierungsanordnung (70) positionsgenau mit der ersten Teilvorrichtung (51) verbunden ist, wobei die Positionierungsanordnung (70) drei rotationssymmetrische Körper (71) und drei korrespondierende Aufnahmebereiche (73) umfasst.

8. Messvorrichtung (10) nach einem der Ansprüche 1 bis 7, **dadurch gekennzeichnet, dass** die zweite Teilvorrichtung (52) der Optikanordnung (50) über
- eine Magnetanordnung,
- eine Federanordnung,
- ein System, das einen Unterdruck erzeugt,
- eine Anordnung mit einem Bajonettverschluss, oder über
- einen Riegel, insbesondere über einen elektro-mechanisch zu betätigenden
Riegel,
mit der ersten Teilvorrichtung (51) verbunden ist.

9. Messvorrichtung (10) nach einem der Ansprüche 1 bis 8, **dadurch gekennzeichnet, dass** sie zusätzlich zu der zweiten Teilvorrichtung (52) mindestens eine weitere Teilvorrichtung umfasst, wobei sich diese Teilvorrichtungen (52) dadurch unterscheiden, dass sie unterschiedliche optische Messbereiche (MB) und/oder unterschiedliche Messabstände haben.

10. Verfahren zum Durchführen einer optischen Abstandsmessung an einer Objektebene (OE) eines Bauteils, insbesondere eines Zahnrad-Bauteils (11), mit den folgenden Schritten:
- Auswählen einer Teilvorrichtung (52) aus einer Menge von Teilvorrichtungen, die sich durch unterschiedliche optische Messbereiche (MB) unterscheiden und/oder unterschiedliche Messabstände,
- Bereitstellen einer Optikanordnung (50) durch das Anbringen der ausgewählten Teilvorrichtung (52) an einer ersten Teilvorrichtung (51) so, dass sich eine optische Achse (OA) der Optikanordnung (50) ergibt, die konzentrisch durch beide Teilvorrichtungen (51, 52) hindurch in Richtung der Objektebene (OE) verläuft,
- Positionieren der Optikanordnung (50) relativ zu der Objektebene (OE), wobei ein relativer Abstand zwischen der Optikanordnung (50) und der Objektebene (OE) vorgegeben wird, der im Bereich des optischen Messbereichs (MB) der ausgewählten Teilvorrichtung (52) liegt,
- Einkoppeln von Weisslicht oder Breitspektrumlicht mit mehreren Spektralanteilen so, dass das Weisslicht oder Breitspektrumlicht in dem optischen Messbereich (MB) unterschiedliche Fokuspunkte für die Spektralanteile bildet,
- Einkoppeln von einem Spektralanteil, dessen Fokuspunkt die Objektebene (OE) getroffen hat, in die Optikanordnung (50),
- Führen dieses Spektralanteils zu einem Detektor (26), der zur Spektralanalyse dieses Spektralanteils ausgelegt ist,
- Ermitteln der Wellenlänge dieses Spektralanteils oder Detektieren dieses Spektralanteils,
- Ermitteln von Abstandsinformation aus der ermittelten Wellenlänge und aus Information, die den optischen Messbereich (MB) der ausgewählten Teilvorrichtung (52) definiert.
